# EUROPEAN PATENT APPLICATION

(11) **EP 4 801 014 A1**
(43) Date of publication of application: **02.09.2026**
(21) Application number: 26160616.4
(22) Date of filing: 25.02.2026
(51) Int. Cl.: H04L 67/50

(54) **MEDIA CONTROL ADAPTIVE MESSAGING**

(30) Priority: 28.02.2025 US 202519066758
(71) Applicant: Google LLC, Mountain View, CA 94043 (US)
(72) Inventor: ROBERTS, Stephen Ian, London, N1C 4AG (GB); SCHMID, Philipp Lucas Valentin, London, N1C 4AG (GB); ERNSTSSON, Bengt Magnus, 00100 Helsinki (FI); BULLOCK, Gregory Russell, 8002 Zurich (CH); TANSLEY, Robert Hugh, London, N1C 4AG (GB); SHEVDE, Sumukh Ashok, Mountain View, CA 94043 (US); ALMALKI, Nazih, Ontario, N2H 5G5 (CA)
(74) Representative: Chettle, John Edward

(57) **Abstract**

A first computing device is configured to receive an indication of subscription request to at least one data of a plurality of data fields of a media bridging protocol from a second computing device. The first computing device receives the indication of subscription request as specifying one or more types of messages that correspond to at least one of the plurality of data fields and that are to be sent via the bridging protocol to the second computing device. The first computing device is further configured to generate messages for the plurality of data fields and determine a subset of the generated messages that are associated with the subscribed data fields to be provided to the second computing device. The first computing device is further configured to provide the subset of messages to the second computing device via the bridging protocol.

## Description

### BACKGROUND

Computing devices, such as so-called smartwatches, smartphones, tablet computers, laptops, fitness trackers, and the like may include one or more various wireless radios, transceivers, and antennas for establishing wireless communications with separate communications networks, including telephony networks, internet protocol (IP) based networks such as the public Internet, private networks, and satellite communications networks, via which the wearable computing devices receive and transmit data. The computing devices may exchange information between themselves using the wireless communication protocols.

### SUMMARY

In general, this disclosure is directed to adaptive management of messages sent via a media bridging protocol. A first computing device, such as a smartphone, may be connected to a second computing device, such as a smartwatch, and enable the smartwatch to control media provided by the smartphone (e.g., enable a user to pause music that is playing on their smartphone using their smartwatch). In some configurations, the smartphone and smartwatch exchange messages related to the media controls (e.g., play-pause, name of an artist, etc.) regardless of whether the media controls are being used or whether the user is even interacting with the smartwatch. The smartphone and smartwatch may unnecessarily consume limited battery life by exchanging such messages while the media controls are unused.

The smartwatch may subscribe to one or more data fields of a bridging protocol, where the data fields correspond to types of data communicated via the bridging protocol (e.g., a data field corresponding to the name of a track or artist, volume controls, whether media is playing or paused, etc.). Based on this subscription, the smartphone determines what types of messages should be sent to the smartwatch (e.g., based on the subscription, which messages should be sent, and which messages shouldn't be sent). The first computing device determines a subset of messages that are to be provided to the smartwatch and provides the subset of messages to the smartwatch via the bridging protocol that are included in associated with subscribed media fields (as opposed to sending all of the messages). The providing of messages based on the subscription may reduce the number of messages communicated to the smartwatch and reduce the power consumption associated with processing the messages.

In an example, a method includes receiving, by a first computing device, an indication of a subscription request to at least one data field of a plurality of data fields of a bridging protocol, where the indication is received from a second computing device and wherein the subscription request specifies one or more types of messages that correspond to the at least one data field and that are to be sent via the bridging protocol; generating, by the first computing device, one or more messages for at least one of the plurality of data fields; determining, by the first computing device, a subset of messages from the one or more messages to provide to the second computing device, where each message from the subset of messages is associated with the subscribed at least one data field; and providing, by the first computing device, the subset of messages to the second computing device via the bridging protocol.

In another example, a computing device includes memory, and at least one processor in communication with the memory and configured to receive an indication of a subscription request to at least one data field of a plurality of data fields of a bridging protocol, where the indication is received from a second computing device and wherein the subscription request specifies one or more types of messages that correspond to the at least one data field and that are to be sent via the bridging protocol; generate one or more messages for at least one of the plurality of data fields; determine a subset of messages from the one or more messages to provide to the second computing device, where each message from the subset of messages is associated with the subscribed at least one data field; and provide the subset of messages to the second computing device via the bridging protocol.

In yet another example, non-transitory computer-readable storage medium is encoded with instructions that, when executed, cause at least one processor of a first computing device to receive an indication of a subscription request to at least one data field of a plurality of data fields of a bridging protocol, where the indication is received from a second computing device and wherein the subscription request specifies one or more types of messages that correspond to the at least one data field and that are to be sent via the bridging protocol; generate one or more messages for at least one of the plurality of data fields; determine a subset of messages from the one or more messages to provide to the second computing device, where each message of the subset of messages is associated with the subscribed at least one data field from the one or more messages; and provide the subset of messages to the second computing device via the bridging protocol

The details of one or more examples of the disclosure are set forth in the accompanying drawings and the description below. Other features, objects, and advantages will be apparent from the description and drawings, and from the claims.

### BRIEF DESCRIPTION OF DRAWINGS

FIG. 1 illustrates an example computing system for aggregating media control messages based on a subscription, in accordance with one or more techniques of this disclosure.
FIG. 2 illustrates an example computing device that aggregates media control messages into batch messages based on a subscription, in accordance with techniques of this disclosure.
FIG. 3 illustrates an example computing device that receives batch messages, in accordance with techniques of this disclosure.
FIG. 4 is a flow chart that illustrates an example operation of aggregating media control messages into a batch message based on a subscription, in accordance with techniques of this disclosure.
FIG. 5 is a flow chart that illustrates an example operation of aggregating media control messages into a batch message based on a subscription, in accordance with techniques of this disclosure.

Like reference characters denote like elements throughout the text and figures.

### DETAILED DESCRIPTION

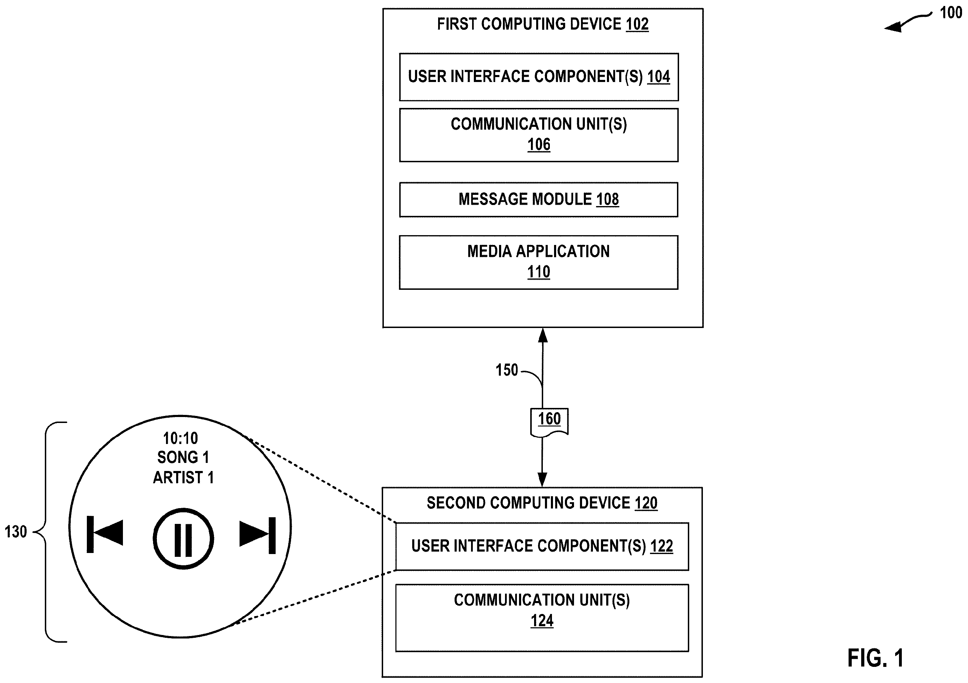

FIG. 1 illustrates an example computing system 100 for aggregating media control messages based on a subscription, in accordance with one or more techniques of this disclosure. Computing system 100 includes first computing device 102 and second computing device 120.

First computing device 102 may include one or more types of computing device, such as a smartphone, laptop, desktop, tablet, artificial intelligence (Al)-enabled smart pin, AI-enabled goggles/glasses, augmented reality (AR) glasses/goggles, virtual reality (VR) glasses/goggles, and/or other type of computing device. First computing device 102 may enable a user to consume various types of media. For example, first computing device 102 may stream music from an off-device source (e.g., a cloud-based music service) and output the music to the user via user interface components 104.

First computing device includes one or more of user interface components 104 (hereinafter "UIC 104"). UIC 104 may include one or more components of first computing device 102 that enable a user to interact with and receive output from first computing device 102. UIC 104 may include one or more input and output devices such as displays, touchscreens, speakers, microphones, haptic engines, LED indicators, projected keyboards, buttons, rotatable components (e.g., rotating bezels on a smartwatch), and/or other components. For example, UIC 104 may include speakers that enable first computing device 102 to output media to a user.

First computing device 102 includes one or more of communications units 106. Communication units 106 may include one or more components that enable communication with other computing devices, such as antennas, modems, radios, and network interfaces, among other components. First computing device 102 may use one or more of communication units 106 to communicate via one or more networks, such as non-terrestrial communication networks (e.g., satellite networks) and/or terrestrial cellular networks.

First computing device 102 includes media application 110, which may be a software component of first computing device 102 that facilitates the playback of media. Media application 110 may enable a user of first computing device 102 to obtain media from one or more sources (e.g., a streaming service) and output the media via UIC 104. In addition, media application 110 may facilitate the playback of media and/or control of the media via one or more other devices, such as second computing device 120.

Second computing device 120 may include one or more types of computing device, such as a smartphone, laptop, desktop, tablet, artificial intelligence (AI)-enabled smart pin, AI-enabled goggles/glasses, augmented reality (AR) glasses/goggles, virtual reality (VR) glasses/goggles, and/or other type of computing device. Second computing device 120 may enable a user to control media output via first computing device 102. For example, second computing device 120 may enable a user to view the title and artist of a song being played by first computing device 102.

Second computing device 120 includes one or more of user interfaces components 122 (hereinafter "UIC 122"). UIC 122 may include one or more components of second computing device 120 that enable a user to interact with and receive output from second computing device 120. UIC 104 may include one or more input and output devices such as displays, touchscreens, speakers, microphones, haptic engines, LED indicators, projected keyboards, buttons, rotatable components (e.g., rotating bezels on a smartwatch), and/or other components.

Second computing device 120 includes one or more of communication units 124. Communication units 124 may include one or more components that enable communication with other computing devices, such as antennas, modems, radios, and network interfaces, among other components. Second computing device 120 may use one or more of communication units 124 to communicate via one or more networks, such as non-terrestrial communication networks (e.g., satellite networks) and/or terrestrial cellular networks. Second computing device 120 may be communicatively connected to first computing device 102 via communication units 124. For example, second computing device 120 and first computing device 102 may be communicatively connected via one or more connections, such as connection 150, in accordance with one or more protocols (e.g., BLUETOOTH, WI-FI, BLUETOOTH Low Energy (BLE), Ultra-Wideband (UWB), etc.). For example, connection 150 may be a BLUETOOTH Classic connection that enables communication between first computing device 102 and second computing device 120.

Second computing device 120 may communicate with first computing device 102 to facilitate media playback control on first computing device 102 via connection 150. Second computing device 120 may enable a user to control media played by first computing device 102 and to view information regarding the media. For example, first computing device 102 may send data to second computing device 120 that includes information regarding a song being played by first computing device 102. Second computing device 120 may send data to first computing device 102 to enable a user of second computing device 120 to control the media played by first computing device 102 (e.g., skip a track, select a different track, play/pause, rewind, fast forward, etc.). First computing device 102 may receive the data and execute one or more actions based on the data.

First computing device 102 and second computing device 120 may use a media bridging protocol over connection 150 to facilitate the media playback control and other functionality (e.g., displaying playlists and media information, displaying album cover images, etc.). Second computing device 120 may receive media control messages (alternatively referred to as "messages" throughout this disclosure) that are in accordance with the media bridging protocol from first computing device 102 regarding media playback on first computing device 102 via connection 150. Second computing device 120 may receive media control messages that may include one or more types of messages, such as data packets, control packets, and/or other types of messages that include data regarding media control. Second computing device 120 may send messages to first computing device 102 regarding the media playback. In an example, second computing device 120 receives messages from first computing device regarding a song being played by first computing device 102 and provides a message to first computing device 102 regarding skipping the song.

First computing device 102 includes message module 108, which may be a software component of first computing device 102 that manages messages sent by first computing device 102 regarding media control. Message module 108 may define one or more data fields that correspond to various types of data communicated via the media bridging protocol, such as scrubbing a media file, skipping a media file, starting playback of a media file, stopping playback of a media file, a name of a media file, volume of first computing device 102, volume of second computing device 120, and/or image data associated with a media file among other data fields. In some examples, the media bridging protocol may define the data fields. Message module 108 may send and receive various types of messages from second computing device 120 that correspond to one or more data fields as part of facilitating the media control. For example, message module 108 may send and receive types of messages that include media controls (e.g., messages that are related to controlling playback of media), media information (e.g., album title, song title, artist name, etc.), and/or other types of messages.

Second computing device 120 may generate instances of user interface (UI) 130 based on the messages received from first computing device 102. UI 130 may be a user interface that includes one or more visual elements that visually display information and/or correspond to functionality of second computing device 120. In the example of FIG. 1, UI 130 includes a visual element that displays the name of a song ("SONG 1"), a visual element that displays the name of an artist ("ARTIST 1"), a visual element that corresponds to play/pause functionality, and visual elements that correspond to skip and reverse functionality.

Message module 108 may organize the messages generated by first computing device 102 for second computing device 120 into the one or more data fields. Message module 108 may associate or otherwise include messages generated by first computing device 102 with a data field of the one or more data fields. In an example, message module 108 determines that a first message generated by first computing device 102 corresponds to a "start playback" data field and that a second message generated by first computing device 102 corresponds to an "artist name" data field. First computing device 102 associates the messages with the corresponding data fields.

First computing device 102 and second computing device 120 may consume a non-trivial amount of battery life due to the exchange and processing of messages in accordance with the media bridging protocol. For example, first computing device 102 may send media control messages as they are generated and cause second computing device 120 to consume power to process each message as it arrives. In addition, first computing device 102 may send messages in accordance with the media bridging protocol regardless of whether a user of second computing device 120 is using the media controls. For example, first computing device 102 may send media bridging messages to second computing device 120 even if a user of second computing device 120 is not interacting with second computing device 120 and cause second computing device 120 to consume additional power. As a result, second computing device 120 may unnecessarily shorten battery life by processing media control messages received from first computing device 102 when the media controls are not in use. Additionally, second computing device 120 may wake from a sleep state to process messages indicative of changes on first computing device 102 regardless of whether they are relevant to the user of second computing device 120. Furthermore, some applications executed by first computing device 102 may flood to second computing device 120 with unnecessary messages and cause second computing device 120 to consume battery life by processing the unnecessary messages (e.g., repeatedly sending updates regarding a song title when the currently playing song hasn't changed).

In accordance with the techniques of this disclosure, first computing device 102 determines the media control messages to send to second computing device 120 based on a subscription to one or more data fields and that specifies one or more types of messages that correspond to the one or more data fields. Second computing device 120 may subscribe to one or more data fields managed by message module 108 by providing an indication of a subscription request to first computing device 102. Based on the subscription request, first computing device 102 determines messages associated for the subscribed data field(s) to provide to second computing device 120 and provides subscription messages 160 as including the media control messages to second computing device 120 via connection 150. While described in the context of bridging from first computing device 102 to second computing device 120, this disclosure may be applicable to bridging from second computing device 120 to first computing device 102.

Second computing device 120 may determine a context of second computing device 120, where the context is a contextualized state of second computing device 120 representative of how second computing device 120 is being used (e.g., how a user is interacting with second computing device 120) and/or what information second computing device 120 is displaying via UI 130. Second computing device 120 may determine the context based one or more factors that include whether a user is interacting with second computing device 120, an activity state of second computing device 120 (e.g., a workout mode, a special activity mode, etc.), whether second computing device 120 is displaying UI 130 as including media controls, whether second computing device 120 is displaying a widget, whether second computing device 120 is executing a universal media object (UMO), and/or other factors. For example, second computing device 120 may determine a context based on media fields displayed by a UMO, where the media fields include media metadata (title, artist, album, etc.), playback information (playback state, playback speed, playback position, etc.), playlist items, custom media actions, and other media fields. Second computing device 120 may determine a context that is indicative of media not being played by first computing device 102 and second computing device 120 and that therefore there is no need to bridge media messages.

Second computing device 120 may determine which of the one or more data fields to subscribe to with a subscription request, where the subscription request specifies one or more types of messages that correspond to the one or more data fields and that are to be sent via the media bridging protocol. Second computing device 120 may determine a subscription request that includes identifiers of one or more subscriptions, where the subscriptions are indicative of the one or more data fields and other information (e.g., rate limits for types of messages). In an example, second computing device 120 determines a subscription request that includes identifiers of multiple subscriptions to data fields of the media bridging protocol and a request token (e.g., an authentication token). Second computing device 120 may determine the subscription based on one or more factors, such as the context of second computing device 120, requests for subscriptions by applications of second computing device, features/surfaces of second computing device 120 (e.g., UI features provided by an operating system of second computing device 120), and/or other factors. For example, a media player application executed by second computing device 120 may request that second computing device 120 include a particular subscription in a subscription request to first computing device 102. Second computing device 120 may determine that second computing device 120 does not need to subscribe to any media fields based on determining that no media is being played by first computing device 102 and second computing device 120.

In some examples, second computing device 120 selects one or more subscriptions for inclusion in the subscription request as part of determining which of the one or more data fields to subscribe to with the subscription request. Second computing device 120 may select one or more subscriptions from a list of subscriptions maintained by second computing device 120. In an example, second computing device 120 selects multiple subscriptions from a list that includes a plurality of subscriptions. Second computing device 120 may select one or more subscriptions that not only define data fields but also define rate limits for sending messages in accordance with the subscription (e.g., how often first computing device 102 should send messages associated with data fields of the subscription). In some examples, each subscription included in the list may include a name or other identifier, a set of session criteria that are indicative of a session or session that a given subscription applies to, and a session field mask that specifies the data fields that should be bridged (e.g., included in media bridging communications between first computing device 102 and second computing device 120) to satisfy the subscription.

Second computing device 120 may generate indications of subscription requests and provide the indications to first computing device 102. Second computing device 120 may generate an indication that includes one or more fields that correspond to the data fields of the media bridging protocol and/or as including identifiers of subscriptions (e.g., instead of the data fields themselves) Second computing device 120 may generate the indication as directly including the identifiers of data fields, as including identifiers of subscriptions that in turn correspond to data fields, and/or a combination of identifiers of both data fields and subscriptions. For example, second computing device 120 may generate an indication that includes an entry for each data field of the media bridging protocol and a corresponding indication of whether second computing device 120 is subscribing to that data field. Second computing device 120 may provide the indication to first computing device 102 via connection 150. In some examples, second computing device 120 may generate and provide an indication of subscription request that includes an indication of a maximum number of messages to include in a single instance of subscription messages 160.

First computing device 102 receives indications of subscription requests from second computing device 120. First computing device 102 may receive an indication via connection 150 that includes information regarding one or more subscriptions that correspond to data fields to which second computing device 120 subscribes. In an example, second computing device 120 determines subscriptions and generates an indication of the subscription request as including indications or identifiers of the subscriptions. Second computing device 120 provides the indication via connection 150 to first computing device 102.

First computing device 102 may process indications of subscription requests received from second computing device 120. First computing device 102 may use one or more components, such as message module 108, to process and register subscriptions based on received indications of subscription requests. Message module 108 may register subscriptions in one or more ways, such as storing subscriptions indicated in the subscription request in a memory of first computing device 102. In an example, first computing device 102 receives an indication of a subscription from second computing device 120. Message module 108 processes the indication of the subscription and registers the subscription. First computing device 102 may compare the indications of subscriptions included in the subscription request to a record of subscriptions (e.g., a list of possible subscriptions known by first computing device 102) and record the subscriptions included in the subscription request.

First computing device 102 generates messages for one or more data fields of the media bridging protocol. First computing device 102 may generate the messages based on one or more factors, such as user interaction with a media control, a change in media being played (e.g., first computing device 102 begins playing the next song from an album or playlist), prompting by an application (e.g., an application that interfaces with the operating system of first computing device 102), and/or other changes or events associated with the media bridging protocol. One or more components of first computing device 102, such as message module 108 and/or media application 110, may generate the messages to enable second computing device 120 to receive information regarding media being played by first computing device 102 and to enable second computing device 120 to control the media being played. When generating the messages, first computing device 102 associates the message with at least one data field of the media bridging protocol.

Message module 108 may determine a subset of the messages generated by first computing device 102 that should be sent to second computing device 120 based on the subscription registered by message module 108 via subscription messages 160, where subscription messages 160 are messages that have been "batched" such that fewer messages are sent to second computing device 120. Message module 108 may determine whether a message is a type of message associated with a subscribed data field (e.g., a data field specified in the registered subscription). In an example, message module 108 registers a subscription that specifies a first data field that corresponds to an image of an album and a second data field that corresponds to an indication of whether a song is playing or paused. First computing device 102 generates a message for the first data field. Message module 108 determines that the message is associated with a subscribed data field and should be included in a subset of the generated messages that are to be batched to reduce the number of messages provided or sent to second computing device 120 via subscription messages 160. Message module 108 may determine the subset of messages to be sent as subscription messages 160 as messages are generated by first computing device 102 and/or on a periodic interval.

In some examples, message module 108 may determine the subset of generated messages that are to be provided to second computing device 120 in batched messages (e.g., aggregations of subscription messages 160 and/or groups of subscription messages 160) based on a time window. Message module 108 may determine that messages that are associated with subscribed data fields and that are generated within a periodic time window (e.g., milliseconds, second, minutes, etc.) provided to second computing device 120. In an example, message module 108 determines that a time window has elapsed. Message module 108 processes messages generated by first computing device 102 during the time window and determines which of the generated messages are associated with subscribed media fields and should be aggregated into subscription messages 160 as a batched message and/or provided to second computing device 120.

In some examples, message module 108 may determine the subset of generated messages that are to be provided to second computing device 120 via subscription messages 160 based on a predetermined threshold of messages. Message module 108 may determine a maximum number of messages that may be included in subscription messages 160 (e.g., a number specified by the media bridging protocol). In some examples, second computing device 120 may determine a maximum number of messages that may be included in subscription messages 160 and provide an indication of the maximum number of messages to first computing device 102. Based on determining the maximum number of messages, message module 108 may determine a predetermined threshold of messages. Message module 108 may limit the number of messages that are included in subscription messages 160 to the predetermined threshold or a lower number of messages. Message module 108 may determine that a threshold number of messages has been satisfied and send an instance of subscription messages 160.

In some examples, message module 108 aggregates messages generated by first computing device 102 based on determining which messages are associated with one or more subscribed data fields and should be included in batch message 160. Message module 108 may generate subscription messages 160 that include the messages associated with the subscribed media in one or more ways. For example, message module 108 may extract a payload of each message, aggregate the message payloads into a payload of an instance of subscription messages 160, and generate a header for the subscription message indicating that the subscription message includes the payload of multiple messages. In some examples, message module 108 may compress one or more of the messages when aggregating the subset of messages into an instance of subscription messages 160.

In some examples, message module 108 may refrain from providing messages generated by first computing device 102 that are not included in the subset of messages provided as subscription message 160. In an example, message module 108 determines a subset of the messages generated by first computing device 102 to be provided as subscription messages 160. Message module 108 refrains from providing the other messages generated by first computing device 102, as the other messages are not subscribed to.

Message module 108 determines whether rate limits for one or more subscriptions have been satisfied. Message module 108 may track how many messages have been sent for each data field and determine whether a rate limit specified by a subscription has been exceeded. In an example, message module 108 determines a number of messages for each data field that have been sent within a predetermined period of time. Message module 108 determines whether a threshold specified by any of the subscriptions has been satisfied and refrains from sending messages that are associated with data fields specified by the subscriptions. Message module 108 continues to provide messages as subscription messages 160 and/or otherwise send messages that are associated with subscriptions that are not disabled or rate limited.

In some examples, message module 108 uses one or more types of algorithms to facilitate the rate limiting of messages sent to second computing device 120. Message module 108 uses algorithms that include a leaky bucket algorithm to facilitate the rate limiting and to alleviate the impact of apps exhibiting undesirable behavior (e.g., sending large volumes of unnecessary messages and thereby draining the battery of second computing device 120). Message module 108 may use the algorithms to reduce battery drain of second computing device 120 while avoiding the display of stale data to a user of second computing device 120. In an example, message module 108 receives a subscription request for a subscription with an associated rate limit, where the rate limit specifies a maximum number of tokens that may be associated with the subscription (e.g., the "size" of a bucket), a token increment rate (e.g., how often a token is refilled into the bucket), and a minimum token threshold (e.g., should the number of tokens in the bucket reach zero, how many tokens the bucket must include before messages may be sent and tokens expended). Message module 108 sends a message to second computing device 120 and subtracts a token from each "bucket" subscription bucket associated with the message. Message module 108 may disable one or more subscriptions based on associated "buckets" reaching zero. For example, message module 108 may determine that a particular subscription has repeatedly emptied an associated bucket and disable the subscription.

Message module 108 sends subscription messages 160 to second computing device 120 via connection 150. Message module 108 may determine whether one or more thresholds have been satisfied and send subscription messages 160 based on the determination. Message module 108 may determine that a threshold time has elapsed (e.g., a time window) and/or determine that a threshold number of messages has been satisfied (e.g., message module 108 determines that a certain number of messages are ready to be provided as subscription messages 160 and/or have been included in the subset of messages). Based on determining that one or more thresholds have been satisfied, message module 108 may send subscription messages 160. In an example, message module 108 determines that first computing device 102 has generated a number of messages for subscribed data fields and that the number of generated messages satisfies an associated threshold. Message module 108 causes communication units 106 to provide subscription message 160 to second computing device 120 via connection 150.

Second computing device 120 may receive subscription messages 160 and process subscription messages 160. Second computing device 120 may process batch message 160 by extracting and/or unpacking the messages from batch message 160 and update UI 130 based on the messages included in subscription messages 160. For example, second computing device 120 may receive subscription messages 160 as including a message regarding the name of a song. Second computing device 120 processes subscription messages 160 to extract the message regarding the name of the song.

Second computing device 120 may perform one or more actions in response to receiving subscription messages 160. Second computing device 120 may generate and output an updated instance of UI 130, generate auditory indications, and/or perform one or more other actions. For example, second computing device 120 may generate an updated instance of UI 130 to include information regarding the name of an artist included in subscription messages 160 and output the updated instance of UI 130 via UIC 122.

In some examples, first computing device 102 may include a flag or token in subscription messages 160 and/or other messages sent to second computing device 120 to enable second computing device 120 to verify the subscription (e.g., that a subscription request was successfully processed by first computing device 102). First computing device 102 may generate subscription messages 160 as including a flag in a field, such as "active_request_token", or a token indicative of a success of a subscription request and provide an instance of subscription messages 160 as including the field. Second computing device 120 may receive subscription messages 160 that include the field and use the flag/token within the field to verify that first computing device 102 has successfully applied the subscription(s) included in a subscription request to the media messages sent via connection 150. For example, second computing device 120 may use the flag/token to verify that first computing device 102 will send messages associated with the correct data fields (e.g., the subscribed data fields). In some examples, first computing device 102 may generate instances of subscription messages 160 with the flag/field including a list of assets (e.g., album artwork or other images) that are to be sent via connection 150.

Second computing device 120 may determine one or more changes to the subscription to messages from first computing device 102. Second computing device 120 may determine that one or more events have occurred (e.g., a change in the context of second computing device 120, the receipt of user input, receipt of an indication from first computing device 102, and/or other events). Based on determining that one or more events have occurred, second computing device 120 may determine one or more changes to the subscription to determine an updated subscription request. Second computing device 120 may determine an updated subscription request that specifies at least one type of at least one type of message. For example, second computing device 120 may determine that the context of second computing device 120 has changed and that the subscription to messages from first computing device 102 should be changed. Second computing device 120 may determine an updated subscription request that includes subscriptions to different data fields, additional data fields, fewer data fields, different subscriptions and/or other changes as compared to a current subscription. Second computing device 120 may generate an indication of the updated subscription request that specifies a different subset of messages and/or subscriptions to be sent to second computing device 120. Second computing device 120 may provide an indication of the updated subscription request to first computing device 102. First computing device 102 may receive the indication from second computing device 120 and cause message module 108 to update a record of the subscription. Based on the updated record, first computing device 102 may provide messages based on the at least one data field corresponding to the at least one type of message specified by the updated subscription request.

Second computing device 120 may check subscription criteria as part of determining changes to a subscription. Second computing device 120 may determine whether a current state of second computing device 120 (e.g., the context) matches the session criteria for each of the current subscriptions. Second computing device 120 may determine that at least one of the session criteria for a subscription is no longer met (e.g., that the current state of second computing device 120 no longer meets all of the session criteria) and refrain from including an identifier of the subscription in a subscription request.

In some examples, an original equipment manufacturer (OEM) or other related entity of second computing device 120 may customize the subscriptions and/or create custom subscriptions. An OEM may configure one or more customized subscriptions for second computing device 120 that are based on the context of second computing device 120. A computing system associated with the OEM or other entity may determine a customized subscription for second computing device 120 for use by second computing device 120 in one or more scenarios, such as whether there is an ongoing activity on second computing device 120, a widget being displayed by second computing device 120, and/or there is an active UMO in use by second computing device 120. The computing system may generate an indication of a customized subscription that specifies one or more types of messages that correspond to at least one data field and send the indication to second computing device 120. The computing system may provide the indication to second computing device 120 in one or more ways, such as including the indication in an update, sending the indication via first computing device 102 for first computing device 102 to provide via connection 150, and/or other ways.

Second computing device 120 may receive the indication of a customized subscription from the computing system and process the indication. Based on the receipt of the indication, second computing device 120 may update a record of subscriptions to include the customized subscription. For example, an OEM may configure a customized subscription for second computing device 120 that is to be used when second computing device 120 is displaying a particular widget in UI 130 and provide an indication of the customized subscription to second computing device 120. Second computing device 120 may process the indication of the customized subscription and update a record of subscriptions (e.g., types of subscriptions and associated contexts of second computing device 120).

The techniques of this disclosure may provide one or more practical advantages. For example, the use of subscriptions may reduce the number of messages second computing device 120 must consume power to process and thereby reduce the overall power consumption of second computing device 120. In yet another example, second computing device 120 may use the subscriptions to ensure that first computing device 102 only sends messages that are relevant to a context of second computing device 120. Furthermore, first computing device 102 may use rate limits associated with subscriptions to prevent applications from flooding second computing device 120 with messages. Second computing device 120 may consume a comparatively reduced amount of power and provide comparatively greater battery life due to the reduction in the number of sent messages.

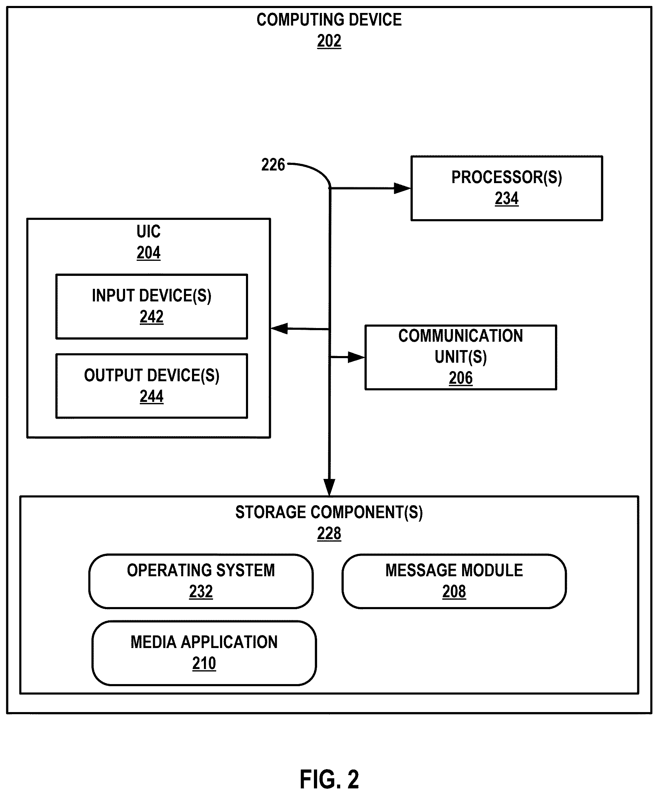

FIG. 2 illustrates an example computing device 202 that aggregates media control messages into batch messages based on a subscription, in accordance with techniques of this disclosure. Computing device 202 may be similar to first computing device 102 as illustrated in FIG. 1 and provide similar functionality.

Computing device 202 includes one or more user interface components 204 (hereinafter "UIC 204"). UIC 204 may be similar to UIC 104 as illustrated in FIG. 1 and provide similar functionality. UIC 204 may include one or more input devices, such as input devices 242, and one or more output devices, such as output devices 244. Input devices 242 may include one or more devices capable of receiving input from a wearer of computing device 202, such as touchscreen, mice, keyboards, and microphones, among other devices capable of receiving user input. Output devices 244 may include one or more devices capable of generating output, such as displays, speakers, haptic engines, and LED indicators, among other components. For example, output devices 244 may include a display that displays GUIs generated by computing device 202.

Computing device 202 may include one or more communications units 206, which may be similar to communication units 106 as illustrated in FIG. 1. Communication units 206 may include one or more components that enable communication with other computing devices, such as antennas, modems, radios, and network interfaces, among other components. Computing device 202 may use one or more of communication units 206 to communicate via one or more networks, such as non-terrestrial communication networks (e.g., satellite networks) and/or terrestrial cellular networks.

Computing device 202 includes one or more of processors 234. Processors 234 may include one or more types of processors and/or processing circuitry that includes mobile processors, desktop processors, integrated processors, reduced instruction set computer (RISC) processors, field-programmable gate arrays (FPGAs), application processors, display controllers, sensor hubs, and/or any other hardware configured to function as a processing unit and/or processing circuitry. Processors 234 may execute the instructions of one or more software components included in storage components 228.

Computing device 202 includes bus 226, which may include one or more hardware and/or software connections. Bus 226 may include hardware and/or software connections that include software interconnects, hardware interconnections, and/or other types of connections. Bus 226 may interconnect one or more components of computing device 202. For example, bus 226 may enable processors 234 to obtain and execute instructions stored in storage components 228.

Computing device 202 includes storage components 228. Storage components 228 may include one or more types of storage such as hard disk drives, solid state drives (e.g., SATA drives, NVMe drives, eMMC storage, etc.), magnetic tape drives, remote storage (e.g., cloud storage), and/or other types of storage. Storage components 228 may store information such as instructions and/or other data of software components of computing device 202, such as an operating system of computing device 202. For example, storage components 228 may include a non-transitory computer-readable storage medium encoded with instructions that, when executed, cause one or more of processors 234 to perform actions of one or more software components stored by storage components 228. Storage components 228 may include a computer program product that includes instructions that cause processors 234 to perform one or more actions of the instructions. For example, storage components 228 may include an external flash drive that includes the instructions of one or more software components of storage components 228.

Storage components 228 include operating system 232 (hereinafter "OS 232"). OS 232 may be an operating system of computing device 202 that provides an execution environment for one or more software components of computing device 202. For example, OS 232 may provide an execution environment for one or more applications of computing device 202.

Storage components 228 include media application 210, which may be similar to media application 110 as illustrated in FIG. 1. Media application 210 may include one or more types of applications, such as video players, music players, streaming service companion applications, games, and/or other types of application. For example, media application 210 may be a music streaming application that facilitates the playing of music via computing device 202.

Media application 210 may generate instances of UI and cause UIC 204 to output the UI. Media application 210 may generate a UI that includes one or more visual elements that correspond to functionality of media application 210 and information regarding media. For example, media application 210 may generate a UI that includes visual elements corresponding to play-pause functionality and information regarding media that is being played.

Media application 210 may receive and process indications of user input. UIC 204 may generate indications of user input in response to receiving user input consistent with interaction and provide the indications to media application 210. Media application 210 may process indications of user input that are indicative of user selection of a visual element included in the UI generated by media application 210. In an example, UIC 204 receives user input consistent with a selection of a pause visual element. UIC 204 generates and provides an indication of the user input to media application 210. Media application 210 pauses the playing of a media file and generates an updated instance of the UI that includes a visual indication that the media file has been paused. Media application 210 provides the UI to UIC 204 for UIC 204 to output the updated instance of the UI. UIC 204 outputs the updated instance of the UI via output devices 244.

Computing device 202 may facilitate control of media application 210 and/or other media functions/applications by another computing device, such as second computing device 120 as illustrated in FIG. 1. Computing device 202 may enable second computing device 120 to media playback on computing device 202 as well as obtain information regarding the media that is being played (e.g., song title, album title, artist name, playlist name, video name, etc.). For example, computing device 202 may enable second computing device 120 to receive information regarding media playback from computing device 202 and to send media playback commands to computing device 202.

Computing device 202 generates media control messages in accordance with a media bridging protocol as part of facilitating the control of media playback by second computing device 120. Computing device 202 may generate one or more types of messages that are associated with different data fields defined by the media control protocol. Computing device 202 may generate media control messages that are associated with various data fields that correspond to different functions of the media bridging protocol. For example, computing device 202 may generate media control messages that are associated with a particular data field, where the particular data field corresponds to media scrubbing functions. One or more components of computing device 202 may determine which messages should be sent to second computing device 120.

Second computing device 120 may determine subscriptions to one or more data fields defined by the media bridging protocol, where the subscriptions specify one or more types of messages that correspond to at least one data field of the media bridging protocol and that are to be sent via the bridging protocol. Second computing device 120 may determine a subscription based on one or more factors (e.g., a context of second computing device 120) and generate an indication of a request for the subscription. Second computing device 120 may send the indication of the subscription request to computing device 202 for processing by one or more components, such as message module 208. In some examples, second computing device 120 may determine an updated subscription that includes one or more changes to a previous subscription included in the subscription request and send an indication of the updated subscription request to computing device 202.

Storage components 228 include message module 208, which may be similar to message module 108 as illustrated in FIG. 1. Message module 208 may process indications of subscription received from second computing device 120. For example, message module 208 may process a subscription request that includes indications of multiple subscriptions. Computing device 202 may receive indications of subscription requests from second computing device 120 via communication units 206 and provide the indications to message module 208. Computing device 202 may receive indications of subscription requests that include identifiers of data fields, information regarding rate limiting (e.g., a maximum message rate threshold, rate limits for individual subscriptions, etc.), and other information. Message module 208 may process the indications and update a record to include indications of the types of messages and associated data fields to which second computing device 120 has subscribed. Message module 208 may receive an indication of subscription request, where the subscription request includes at least one data field associated with scrubbing a media file, skipping a media file, starting playback of a media file, stopping playback of a media file, name of a media file, volume of first computing device 102, and/or image data associated with the media file

One or more components of computing device 202 may generate messages and provide them to message module 208. Message module 208 may determine which messages generated by computing device 202 should be included in a subset of the generated messages to send to second computing device 120. Message module 208 may process indications of subscriptions received from second computing device 120 and determine which messages should be included in a subset of generated messages and sent to second computing device 120 based on the subscription. Message module 208 may determine which messages should be sent to second computing device 120 by determining, for each message generated by computing device 202, an associated data field of the data fields of the media bridging protocol. In an example, message module 208 obtains a plurality of messages generated by computing device 202. Message module 208 determines, for each message, whether the message is associated with a subscribed data field. Based on a message being associated with a subscribed data field, message module 208 includes the message in the subset of messages to be sent to second computing device 120.

In some examples, message module 208 aggregates the subset of messages into a batch message, such as batch message 160 as illustrated in FIG. 1. Message module 208 may aggregate one or more of the messages included in the subset of messages into batch message 160 to reduce the number of messages sent to second computing device 120 (e.g., send the messages as one large message instead of multiple smaller messages). Message module 208 may aggregate the messages in one or more ways, such as combining the payload of the messages into a payload of batch message 160.

In some examples, message module 208 aggregates messages into batch message 160 based on a time window. Message module 208 may aggregate messages associated with subscribed data fields that are generated within a predetermined time window into batch message 160. In an example, message module 208 determines a first subset of the messages generated by computing device 202 are associated with subscribed data fields and were generated within the predetermined time window. Message module 208 aggregates the subset into a first batch message and sends the first batch message to second computing device 120. Message module 208 determines a second subset of messages that are associated with subscribed data fields and that were generated during a subset time window. Message module 208 aggregates the second subset of messages into a second batch message and sends the second batch message to second computing device 120.

In some examples, message module 208 aggregates messages into batch message 160 based on determining that a threshold number of messages has been satisfied. Message module 208 may determine a threshold number of messages that may be aggregated into batch message 160 that is based on one or more factors, such as a maximum payload size of batch message 160, a threshold determined by a manufacturer of computing device 202, and/or other factors. Message module 208 may determine whether the number of messages included in the subset of messages has been satisfied and aggregate the messages into batch message 160. In an example, message module 208 determines which messages generated by computing device 202 are associated with subscribed data fields and included in the subset of messages as the messages are being generated. Message module 208 determines that the number of messages included in the subset of messages satisfies the threshold and aggregates the messages into batch message 160. Message module 208 sends batch message 160 to second computing device 120.

In some examples, message module 208 determines whether to send messages to second computing device 120 based on rate limiting of the messages. Message module 208 may determine whether a "bucket" (e.g., a logical count of tokens or credit associated with or specified by the subscription) has sufficient tokens prior to sending a message, such as batch message 160, to second computing device 120. In an example, message module 208 determines that a bucket associated with a subscription has sufficient tokens. Message module 208 sends the message to second computing device 120 and subtracts a token from the bucket associated with the subscription.

Message module 208 may refrain from providing messages as subscription messages 160 and/or refrain from sending messages as part of rate limiting. Message module 208 may determine whether a rate limit for at least one subscription has been exceeded. For example, message module 208 may determine that, for a particular subscription, a bucket associated with the particular subscription does not include any tokens and refrain from sending messages associated with the particular subscription. Message module 208 may refrain from providing messages associated with the subscription as subscription messages 160 based on determining that a rate limit for the subscription has been exceeded. Message module 208 may determine whether a maximum message rate threshold has been satisfied. Based on determining that the maximum message rate threshold has been satisfied, message module 208 may disable an associated subscription and/or otherwise refrain from sending messages associated with the subscription until the subscription is re-enabled.

In some examples, message module 208 refrains from sending any messages to second computing device 120. Computing device 202 may receive a subscription request that is an indication to disable media control on second computing device 120. Computing device 202 may refrain from providing any of one or more messages to second computing device 120 response to receiving the indication to disable media control on second computing device 120 In some instances, computing device 202 may receive user input consistent with a user requesting the disabling of remote media controls for second computing device 120. Message module 208 may process the indication and refrain from providing any messages to second computing device 120.

Message module 208 sends subscription messages 160 to second computing device 120 via one or more connections, such as connection 150 as illustrated in FIG. 1. Message module 208 may determine a subset of messages from the messages generated by computing device 202 and provide subscription messages 160 to second computing device 120. Message module 208 may generate and send multiple instances of subscription messages 160 as messages are generated by computing device 202.

In some examples, message module 208 provides images, such as album artwork, to second computing device 120 using a different process. Message module 208 may calculate a hash of bytes associated with an image and include a string of the hash in a message rather than including the data in batch message 160 (e.g., batch message 160 may include a size restriction smaller than the size of a given image). Message module 208 may store the data in a media update message and refrain from bridging multiple instances of the same image to second computing device 120 via connection 150. Message module 208 may split the data that includes the hashed bytes into two or more media update messages when the size of the data exceeds a maximum message size. In addition, message module 208 may refrain from sending updates of the image when a currently displayed image does not change (e.g., refrain from sending updates of the image when sending playback position updates as the song and associated album artwork has not changed).

In some other examples, message module 208 provides playback position messages that include timestamp and progress values to second computing device 120. Message module 208 may generate media messages that include a progress value indicative of a current position in a track and a timestamp value indicative of the time at which the progress was measured. Message module 208 may generate media messages as including progress values and timestamp values to enable second computing device 120 to interpolate track position without needing to receive regular track position messages. In an example, message module 208 determines a current track position of a song and a timestamp of the time at which the current track position was determined. Message module 208 sends a media message that includes the current track position and timestamp to second computing device 120. Second computing device 120 processes the message and interpolates track position for a period based on the media message received from computing device 202. Message module 108 may aggregate media messages that include progress values and timestamp values into batch message 160.

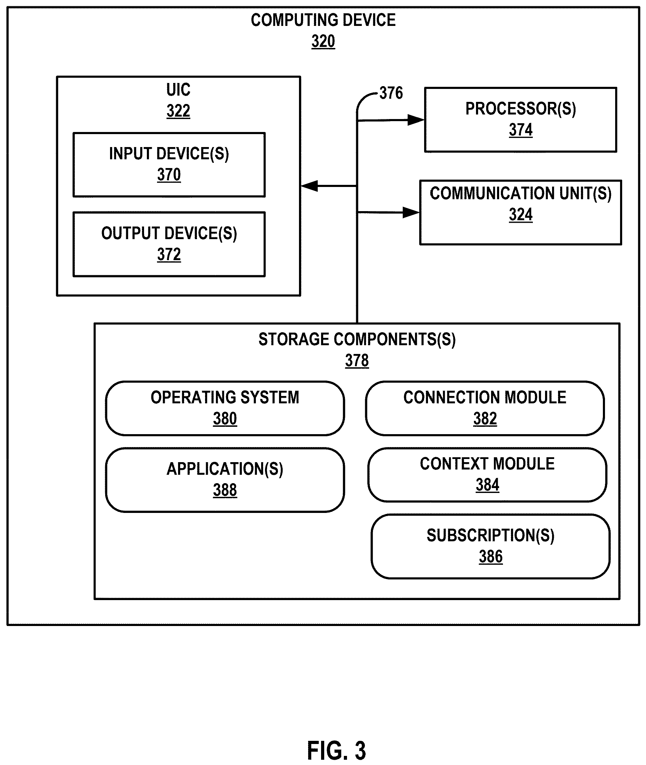

FIG. 3 illustrates an example computing device 320 that receives batch messages, in accordance with techniques of this disclosure. Computing device 320 may be similar to second computing device 120 as illustrated in FIG. 1 and provide similar functionality.

Computing device 320 includes one or more user interface components 322 (hereinafter "UIC 322"). UIC 322 may be similar to UIC 122 as illustrated in FIG. 1 and provide similar functionality. UIC 322 may include one or more input devices, such as input devices 370, and one or more output devices, such as output devices 372. Input devices 370 may include one or more devices capable of receiving input from a user of computing device 320, such as touchscreen, mice, keyboards, and microphones, among other devices capable of receiving user input. Output devices 372 may include one or more devices capable of generating output, such as displays, speakers, haptic engines, and LED indicators, among other components. For example, output devices 372 may include a display that displays UIs generated by computing device 320.

Computing device 320 may include one or more communications units 324, which may be similar to communication units 124 as illustrated in FIG. 1. Communication units 324 may include one or more components that enable communication with other computing devices, such as antennas, modems, radios, and network interfaces, among other components. Computing device 320 may use one or more of communication units 324 to communicate via one or more networks, such as non-terrestrial communication networks (e.g., satellite networks) and/or terrestrial cellular networks.

Computing device 320 includes one or more of processors 374. Processors 374 may include one or more types of processors and/or processing circuitry that includes mobile processors, desktop processors, integrated processors, reduced instruction set computer (RISC) processors, field-programmable gate arrays (FPGAs), application processors, display controllers, sensor hubs, and/or any other hardware configured to function as a processing unit and/or processing circuitry. Processors 374 may execute the instructions of one or more software components included in storage components 378.

Computing device 320 includes bus 376, which may include one or more hardware and/or software connections. Bus 376 may include hardware and/or software connections that include software interconnects, hardware interconnections, and/or other types of connections. Bus 376 may interconnect one or more components of computing device 320. For example, bus 376 may enable processors 374 to obtain and execute instructions stored in storage components 378.

Computing device 320 includes one or more of storage components 378. Storage components 378 may include one or more types of storage such as hard disk drives, solid state drives (e.g., SATA drives, NVMe drives, eMMC storage, etc.), magnetic tape drives, remote storage (e.g., cloud storage), and/or other types of storage. Storage components 378 may store information such as instructions and/or other data of software components of computing device 320, such as an operating system of computing device 320. For example, storage components 378 may include a non-transitory computer-readable storage medium encoded with instructions that, when executed, cause one or more of processors 374 to perform actions of one or more software components stored by storage components 378. Storage components 378 may include a computer program product that includes instructions that cause processors 374 to perform one or more actions of the instructions. For example, storage components 378 may include an external flash drive that includes the instructions of one or more software components of storage components 378.

Storage components 378 include operating system 380 (hereinafter "OS 380"). OS 380 may be an operating system of computing device 320 that provides an execution environment for one or more software components of computing device 320. For example, OS 380 may provide an execution environment for one or more applications of computing device 320.

Storage components 378 include one or more of applications 388, which may include one or more types of application. Applications 388 may include a companion application of media application 110 as illustrated in FIG. 1, a media playback application of computing device 320, and/or other applications of computing device 320. Applications 388 may provide a variety of functionality that includes enabling a user of computing device 320 to control media playback on another device. For instance, an application of applications 388 may process media control messages received from first computing device 102.

First computing device 102 may generate messages, such as media control messages, for computing device 320. First computing device 102 may generate the messages in accordance with a media bridging protocol and as including data regarding media playback. For example, first computing device 102 may generate messages regarding a song that is being played by first computing device 102.

First computing device 102 may send subscription messages 160 to computing device 320. First computing device 102 may provide subscription messages 160 instead of providing all of the messages for the media control protocol to reduce the number of messages sent to second computing device 120. First computing device 102 may send a subset of the messages generated by first computing device 102 based on one or more factors that include a subscription to data fields of the media bridging protocol, time window(s), thresholds for a maximum number of messages that may be sent, and/or other factors.

Storage components 378 include connection module 382, which may be a software component of computing device 320 that manages connections to other devices (e.g., first computing device 102). Connection module 382 may determine a subscription to one or more data fields of the media bridging protocol, where the subscription specifies one or more types of messages that correspond to at least one data field of the media bridging protocol and that are to be sent via the media bridging protocol. Connection module 382 may dynamically determine the subscription and/or select a predefined subscription from subscriptions 386.

Storage components 378 include subscriptions 386, which may be a data structure or other type of data repository that includes information regarding subscriptions. Subscriptions 386 may include one or more predefined subscriptions from which connection module 382 may select. Computing device 320 may store information regarding subscriptions in subscriptions 386 in one or more formats, such as in a table that includes an identifier of the subscription with associated data fields. Computing device 320 may store subscriptions 386 as including session criteria associated with each subscription (e.g., requirements for a subscription to apply) and session field masks associated with each subscription (e.g., media data fields required to be bridged to satisfy the subscription). The session field masks of subscriptions 386 mirror an API surface of a media controller of first computing device 102. In some examples, computing device 320 stores subscriptions 386 as including subscriptions with nested field masks (e.g., a session field mask configured to only bridge a title of a currently playing track as opposed to the title, playback position, and all other data associated with the currently playing track, a session field mask configured to bridge titles of queued songs by applying a field mask to entities with repeating values, etc.).

In some examples, computing device 320 stores subscriptions 386 as including associated rate limits. Computing device 320 may store rate limits that include an upper limit (e.g., total number of tokens/credits that may be held in a "bucket" associated with a subscription), a minimum token threshold (e.g., a minimum number of tokens that is needed to be reached before messages associated with a subscription may be sent again should the number of tokens in the "bucket" reach zero), and a refill rate (e.g., how often tokens are added to the "bucket" such as once per minute, hour, etc.). In addition, computing device 320 may store subscriptions 386 as including a maximum message rate threshold that is indicative of a maximum rate of messages associated with a subscription that are allowed to be sent within a given period. Computing device 320 may provide information regarding rate limits of subscriptions to computing device 102 in subscription requests.

In some examples, connection module 382 modifies the subscriptions maintained by subscriptions 386. A manufacturer of computing device 320 (e.g., an original equipment manufacturer or "OEM") or other entity (e.g., a developer of OS 380, a developer of applications 388, etc.) may determine a subscription and provide information regarding the subscription to computing device 320. Connection module 382 may process the information regarding the subscription and modify subscriptions 386 based on the information regarding the subscription. The OEM may provide the information regarding subscriptions and changes to subscriptions in one or more ways, such as in an update to one or more software components of computing device 320. In an example, an OEM of computing device 320 determines a new subscription for computing device 320. A computing system of the OEM generates an update package for OS 380 that includes information regarding the new subscription and provides the update package to computing device 320. Computing device 320 receives the update package and processes the update package. As part of processing the update package, connection module 382 modifies subscriptions 386 to include the new subscription.

Storage components 378 include context module 384, which may be a component of computing device 320 that determines a context of computing device 320, where the context is a contextualized state of computing device 320. Context module 384 may determine a context of computing device 320 based on one or more factors or interactions with computing device 320 that include user interaction with computing device 320 (e.g., computing device 320 receiving user input consistent with user interaction), an activity state of computing device 320 (e.g., computing device 320 is in a workout mode, in a theater mode, in a do not disturb mode, whether any media is playing, etc.), whether computing device 320 is outputting a UI that includes a widget (e.g., a media control widget), whether computing device 320 is executing a UMO, and/or based on other factors and interactions. For example, context module 384 may determine that computing device 320 does not need to bridge media messages with first computing device 120 as no media is currently playing. Context module 384 may determine a context from a list of contexts and/or dynamically determine a context. For instance, context module 384 may determine a media control context of computing device 320 from a list of predetermined contexts. Context module 384 may provide indications of the context to one or more components of computing device 320, such as connection module 382. In an example, context module 384 obtains information regarding a mode of computing device 320. Context module 384 determines a context of computing device 320 based on the information regarding the mode and provides an indication of the context to connection module 382.

In some examples, an OEM of computing device 320 or other entity may determine one or more of the predetermined contexts of computing device 320. A computing system of the OEM may generate a context that includes one or more conditions and/or requirements of the context and provide information regarding the generated context to computing device 320. Context module 384 may process the information regarding the generated context and update a record or list of contexts to include the generated context.

In some examples, connection module 382 may determine a subscription based on indications of context received from context module 384. Connection module 382 may receive an indication of the context of computing device 320 from context module 384 and determine the subscription based on the context. Connection module 382 may determine the subscription by comparing the context of computing device 320 to subscriptions 386. For example, connection module 382 may determine that a context of computing device 320 corresponds to a subscription of subscriptions 386 (e.g., a subscription with an indication of an associated context).

In some examples, connection module 382 determines multiple subscriptions from subscriptions 386. Connection module 382 may determine more than one subscription from subscriptions 386 based on the context of computing device 320 determined by context module 384. In an example, connection module 382 obtains an indication of a context of computing device 320. Connection module 382 determines more than one subscription from subscriptions 386 that include identifications of data fields.

In some examples, connection module 382 determines one or more subscriptions based on session criteria of subscriptions included in subscriptions 386. Connection module 382 may determine whether a state of computing device 320 and/or a context of computing device 320 applies to the session criteria of a given subscription, where the session criteria are predetermined criteria that are required to be met for a subscription. For example, connection module 382 may determine a subscription based on a priority ranking of a session and only when a session is playing (e.g., sessionCriteria {rankThreshold = 1, playWhenReady = true}).

Connection module 382 may generate an indication of a subscription request and cause computing device 320 to provide the indication to first computing device 102. Connection module 382 may generate an indication that includes identifications of one or more subscriptions and indications for the one or more subscribed data fields specified by the subscriptions (e.g., the session field masks associated with the subscriptions). In an example, connection module 382 determines a subscription based on the context of computing device 320. Connection module 382 generates an indication of the subscription that specifies subscribed data fields and provides the indication to first computing device 102.

First computing device 102 may receive and process indications of subscription received from computing device 320. First computing device 102 may receive an indication of subscription that specifies one or more types of messages associated with at least one data field of the media bridging protocol and aggregate messages based on the subscription. For example, first computing device 102 may determine, from the messages generated by first computing device 102, which messages are to be included in the subset of the generated messages that is to be sent to computing device 320.

First computing device 102 may determine the subset of messages to provide to computing device 320 based on the subscription. In an example, first computing device 102 receives an indication of subscription from computing device 320. First computing device 102 processes the indication and determines a subset of messages to provide as subscription messages 160 based on the subscribed data fields. First computing device 102 sends subscription messages 160 to computing device 320.

Computing device 320 may receive instances of subscription messages 160 from first computing device 102. Computing device 320 may receive subscription messages 160 via communication units 324 and process subscription messages 160. In some examples, computing device 320 may receive subscription messages 160 that include aggregations or batches of subscription messages 160 and extract the messages. Computing device 320 may process subscription messages 160 to extract the messages included in subscription messages 160. In an example, computing device 320 receives batch message 160 via connection 150 using communication units 324. Computing device 320 provides an instance of subscription messages 160 to connection module 382. Connection module 382 processes the subscription message and extracts the media control message(s). Connection module 382 provides the media control messages to one or more recipients, such as applications 388.

Applications 388 may further process messages received from first computing device 102 and processed by connection module 382. Applications 388 may process the received messages and perform one or more actions that include generating an updated instance of a UI of computing device 320. In an example, an application of applications 388 receives a message that includes information regarding the name of an artist. The application processes the message and generates an updated instance UI that includes a visual indication of the name of the artist. The application causes UIC 322 to output the updated instance of the UI.

Computing device 320 may output a UI that includes one or more visual elements. One or more components of computing device 320, such as applications 388, OS 380, and/or other components, may generate instances of the UI and cause UIC 322 to output the UI. UIC 322 may output a UI that includes visual elements that correspond to various functionalities of computing device 320. For example, OS 380 may generate a UI that includes visual elements corresponding to media playback controls and cause UIC 322 to output the UI.

Computing device 320 may receive user input consistent with the selection of one or more visual elements of a UI output by computing device 320. Computing device 320 may receive user input consistent with the selection of visual elements that correspond to functionality of computing device 320, such as play/pause, scrubbing, skip/reverse, and/or other types of functionalities. In addition, computing device 320 may receive and process other types of user input, such as voice commands, gesture commands, and/or other types of user input. In an example, computing device 320 receives user input consistent with the selection of a pause button visual element via UIC 322. Computing device 320 generates and provides an indication of the user input to one or more components of computing device 320.

Connection module 382 may generate messages in accordance with the media bridging protocol. Connection module 382 may generate the message based on one or more factors, such as receiving user input. For example, connection module 382 may generate messages in response to receiving user interactions with a UI of computing device 320 and cause communication units 324 to provide the messages to first computing device 102.

Connection module 382 may provide the messages to first computing device 102 via connection 150. Connection module 382 may cause communication units 324 to send or otherwise transmit messages to first computing device 102 as part of exchanging media control messages with first computing device 102 in accordance with the media bridging protocol. In an example, UIC 322 receives user input consistent with selecting a pause button of a UI of computing device 320. UIC generates and provides an indication of the user input to connection module 382. Connection module 382 processes the indication of the user input and generates a media control message that corresponds to a pause indication in accordance with the media bridging protocol. Connection module 382 causes communication units 324 to send the message to first computing device 102.

Connection module 382 may determine an updated subscription to request from first computing device 102. Connection module 382 may determine an updated subscription based on one or more factors. Connection module 382 may determine the updated subscription by selecting a subscription from subscriptions 386 and/or determining a custom subscription. Connection module 382 may generate an indication of the updated subscription and provide the indication to first computing device 102 via connection 150.

First computing device 102 may process indications of updated subscription received from computing device 320. First computing device 102 may receive an indication of updated subscription from computing device 320 and update a record of the subscription. First computing device 102 may determine a subset of generated messages based on the updated subscription.

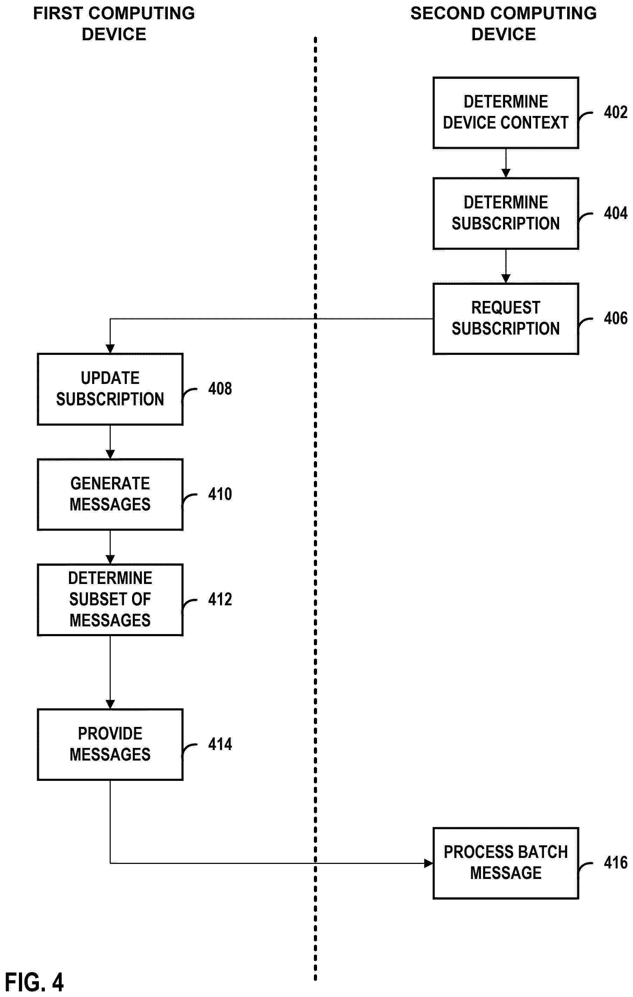

FIG. 4 is a flow chart that illustrates an example operation of aggregating media control messages into a batch message based on a subscription, in accordance with techniques of this disclosure. FIG. 4 is described in the context of FIG. 1.

A second computing device, such as second computing device 120, determines a context (402). Second computing device 120 may determine a context that is a contextual state of second computing device 120, such as media control context. In an example, second computing device 120 determines a media control context based on a media control widget being displayed within a UI of second computing device 120.

Second computing device 120 determines a subscription that specifies one or more types of messages that correspond to at least one data field of the media bridging protocol (404). Second computing device 120 may determine the subscription based on the context of second computing device 120. In an example, second computing device 120 determines that second computing device 120 is in a media control context. Second computing device 120 determines a subscription that corresponds to the media control device.

Second computing device 120 requests a subscription to at least one data field of the media bridging protocol (406). Second computing device 120 may request the subscription from a first computing device, such as first computing device 102. As part of requesting the subscription, second computing device 120 may generate an indication of the subscription request that includes indications of the data fields of the subscription and provide the indication to first computing device 102. Second computing device 120 may generate a subscription request that includes a request for multiple subscriptions. In an example, second computing device 120 generates an indication of the subscription that includes an indication of the at least one data field. Second computing device 120 causes communication units 124 to send the indication of the subscription to first computing device 102.

First computing device 102 updates a subscription for second computing device 120 (408). First computing device 102 may receive an indication of the subscription request from second computing device 120 and update a record of the subscription maintained by first computing device 102. In an example, first computing device 102 receives an indication of the subscription from second computing device 120 via connection 150. First computing device 102 processes the indication of the subscription and updates a record of the subscription based on the indication of data fields included in the indication of the subscription.

First computing device 102 generates media control messages in accordance with the media bridging protocol (410). First computing device 102 may generate one or more media control messages that correspond to various data fields of the media bridging protocol. For example, first computing device 102 may generate messages that correspond to an artist title data field, a play/pause data field, and/or other data fields.

First computing device 102 determines a subset of the messages generated by first computing device 102 (412). First computing device 102 may determine the subset of messages based on which messages of the generated messages are associated with subscribed data fields. In an example, first computing device 102 determines a first subset of the generated messages and a second subset of the generated messages, where the first subset of the messages includes messages associated with subscribed data fields and where the second subset of the messages includes messages associated with media fields to which second computing device 120 has not subscribed. In some examples, first computing device 102 may determine the subset of messages in order to "batch" messages provided to second computing device 120 and thereby reduce the number of messages provided to second computing device 120.

First computing device 102 provides an instance of subscription message 160 to second computing device 120 (414). First computing device 102 may provide subscription messages 160 to second computing device 120 via connection 150. First computing device 102 may provide instances of subscription messages 160 to second computing device 120 as new messages are generated by first computing device 102.

Second computing device 120 processes the instance of subscription messages 160 received from first computing device 102 (416). Second computing device 120 may receive subscription messages 160 from first computing device 102 via communication units 124. Second computing device 120 may process the instance of subscription message 160 in one or more ways, such as by extracting a payload of the subscription message, routing the media control messages included in the subscription message to one or more components of second computing device 120, and/or other ways. For example, second computing device 120 may process the instance of subscription messages 160 and provide a media control message included in the subscription message to a media control application executed by second computing device 120.

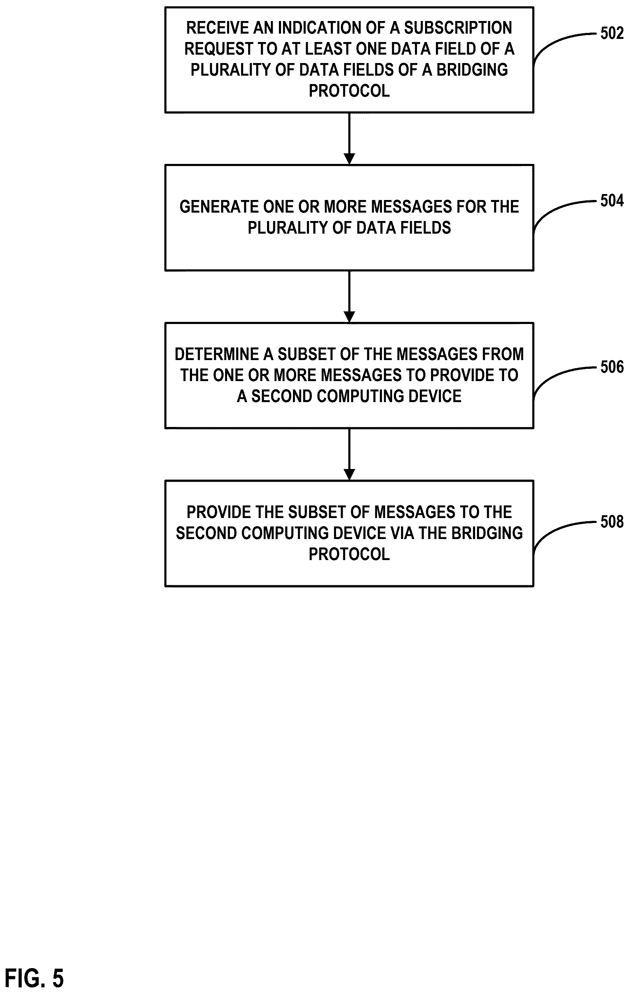

FIG. 5 is a flow chart that illustrates an example operation of aggregating media control messages into a batch message based on a subscription, in accordance with techniques of this disclosure. FIG. 5 is described in the context of FIG. 1.

A first computing device, such as first computing device 102, receives an indication of a subscription to at least one data field of a plurality of data fields of a bridging protocol (502). First computing device 102 may receive the indication of subscription from second computing device 120, where the subscription specifies one or more types of messages that correspond to the at least one data field and that are to be sent via the bridging protocol. First computing device 102 may receive the indication and update a record maintained by first computing device 102 with the subscribed data fields indicated by the indication of the subscription.

First computing device 102 generates one or more or messages for the plurality of data fields (504). First computing device 102 may generate the messages to provide information regarding media played by first computing device 102 to second computing device 120. For example, first computing device 102 may determine that a new song is being played by first computing device 102 and generate messages regarding the new song.

First computing device 102 determines a subset of messages from the one or more messages to provide to second computing device 120, such as subscription messages 160 (506). First computing device 102 determines the subset of messages with each message of the subset of messages associated with the subscribed at least one data field. In some examples, first computing device 102 may determine that a time window has elapsed and/or that a threshold number of messages has been satisfied and determine the subset of messages to be provided based on the determination that the time window has elapsed or that the threshold has been satisfied.

First computing device 102 provides subscription messages 160 to second computing device 120 via the bridging protocol (508). First computing device 102 may provide instances of subscription messages 160 via connection 150 for second computing device 120 to process. Second computing device 120 may process the received subscription messages 160 and perform one or more actions. For example, second computing device 120 may generate an updated UI based on information included in subscription messages 160.

Example 1: A method includes receiving, by a first computing device, an indication of a subscription request to at least one data field of a plurality of data fields of a bridging protocol, wherein the indication is received from a second computing device and wherein the subscription request specifies one or more types of messages that correspond to the at least one data field and that are to be sent via the bridging protocol; generating, by the first computing device, one or more messages for at least one of the plurality of data fields; determining, by the first computing device, a subset of messages from the one or more messages to provide to the second computing device, wherein each message from the subset of messages is associated with the subscribed at least one data field; and providing, by the first computing device, the subset of messages to the second computing device via the bridging protocol.

Example 2: The method of example 1, wherein the subset of messages is a first subset, and further includes determining, by the first computing device and based on associated data fields, a second subset of messages from the one or more messages, wherein each message of the second subset of messages is associated with at least one data field to which the second computing device has not subscribed; and refraining, by the first computing device, from providing the second subset of messages to the second computing device.

Example 3: The method of any of examples 1 and 2, wherein the second computing device determines the indication of a subscription request at least in part based on a context of the second computing device, and wherein the context is a contextualized state of the second computing device.

Example 4: The method of example 3, wherein the second computing device determines the context based on at least one of: user interaction with second computing device, an activity state of the second computing device, a widget displayed by the second computing device, or a media object executed by the second computing device.

Example 5: The method of any of examples 3 and 4, wherein the subscription request includes an indication of one or more subscriptions, and wherein each of the one or more subscriptions includes session criteria indicative of requirements for a subscription to apply and a session field mask indicative of one or more data fields required to satisfy the subscription.

Example 6: The method of example 5, wherein each of the one or more subscriptions include a rate limit, the method further comprising determining, by the first computing device, whether a rate limit for at least one of the one or more subscriptions has been exceeded; and responsive to determining that a rate limit for the at least one subscription has been exceeded, refraining, by the first computing device, from providing messages associated with the at least one subscription to the second computing device.

Example 7: The method of any of examples 1 through 6, wherein determining the subset of messages further comprises: determining messages of the subset of messages generated by the first computing device within a predetermined window of time.

Example 8: The method of any of examples 1 through 7, wherein determining the subset of messages further comprises: determining, for each message of the one or more messages generated by the first computing device, an associated data field of the plurality of data fields; and determining the subset of messages based on the associated data field for each message of the one or more messages.

Example 9: The method of any of examples 1 through 8, wherein the indication is a first indication, and further includes generating, by the second computing device, a second indication of an updated subscription request in response to user input; and receiving, by the first computing device, the second indication of the updated subscription request generated by the second computing device, and wherein determining the subset of messages includes determining the subset of messages based on at least one data field specified by the updated subscription request.

Example 10. The method of any of examples 1-9, wherein the indication of a subscription request is an indication to disable media control on the second computing device, the method further comprising: responsive to receiving the indication to disable media control on the second device, refraining, by the first computing device, from providing any of the one or more messages to the second computing device.

Example 11: A first computing device includes memory, and at least one processor in communication with the memory and configured to: receive an indication of a subscription request to at least one data field of a plurality of data fields of a bridging protocol, wherein the indication is received from a second computing device and wherein the subscription request specifies one or more types of messages that correspond to the at least one data field and that are to be sent via the bridging protocol; generate one or more messages for at least one of the plurality of data fields; determine a subset of messages from the one or more messages to provide to the second computing device, wherein each message from the subset of messages is associated with the subscribed at least one data field; and provide the subset of messages to the second computing device via the bridging protocol.

Example 12: The first computing device of example 11, wherein the subset of messages is a first subset, and wherein the at least one processor is further configured to: determine, based on associated data fields, a second subset of messages from the one or more messages, wherein each message of the second subset of messages is associated with at least one data field to which the second computing device has not subscribed; and refrain from providing the second subset of messages into to the second computing device.

Example 13: The first computing device of any of examples 11 and 12, wherein the second computing device determines the indication of a subscription request at least in part based on a context of the second computing device, and wherein the context is a contextualized state of the second computing device.

Example 14: The first computing device of any of examples 11 through 13, wherein the subscription request includes an indication of one or more subscriptions, and wherein each of the one or more subscriptions includes session criteria indicative of requirements for a subscription to apply and a session field mask indicative of one or more data fields required to satisfy the subscription.

Example 15: The first computing device of example 14, wherein each of the one or more subscriptions include rate limit, and wherein the at least one processor is further configured to determine whether a rate limit for at least one of the one or more subscriptions has been exceeded; and responsive to determining that a rate limit for the at least one subscription has been exceeded, refrain from providing messages associated with the at least one subscription to the second computing device.

Example 16. The first computing device of any of examples 11 through 15, wherein the indication of a subscription request is an indication to disable media control on the second computing device, and wherein the at least one processor is further configured to, responsive to receiving the indication to disable media control on the second device, refrain from providing any of the one or more messages to the second computing device.

Example 17: A non-transitory computer-readable storage medium encoded with instructions that, when executed, cause at least one processor of a first computing device to: receive an indication of a subscription request to at least one data field of a plurality of data fields of a bridging protocol, wherein the indication is received from a second computing device and wherein the subscription request specifies one or more types of messages that correspond to the at least one data field and that are to be sent via the bridging protocol; generate one or more messages for at least one of the plurality of data fields; determine a subset of messages from the one or more messages to provide to the second computing device, wherein each message of the subset of messages is associated with the subscribed at least one data field from the one or more messages; and provide the subset of messages to the second computing device via the bridging protocol.

Example 18: The non-transitory computer-readable storage medium of example 17, wherein the instructions further cause the at least one processor to: determine, based on associated data fields, a second subset of messages from the one or more messages, wherein each message of the second subset of messages is associated with at least one data field to which the second computing device has not subscribed; and refrain from providing the second subset of messages to the second computing device.

Example 19: The non-transitory computer-readable storage medium of any of examples 17 and 18, wherein the second computing device determines the indication of a subscription request at least in part based on a context of the second computing device, and wherein the context is a contextualized state of the second computing device.

Example 20: The non-transitory computer-readable storage medium of example 19, wherein the second computing device determines the context based on at least one of: user interaction with second computing device, an activity state of the second computing device, a widget displayed by the second computing device, or a media object executed by the second computing device.

Example 21: The non-transitory computer-readable storage medium of any of examples 17 through 20, wherein the subscription request includes an indication of one or more subscriptions, and wherein each of the one or more subscriptions includes session criteria indicative of requirements for a subscription to apply and a session field mask indicative of one or more data fields required to satisfy the subscription.

Example 22: The non-transitory computer-readable storage medium of example 21, wherein each of the one or more subscriptions include rate limit, and wherein the instructions further cause the at least one processor to determine whether a rate limit for at least one of the one or more subscriptions has been exceeded; and responsive to determining that a rate limit for the at least one subscription has been exceeded, refrain from providing messages associated with the at least one subscription to the second computing device.

Example 23: A computing system comprising means for performing any combination of the methods of examples 1-11.

Example 24: A computer program product encoded with instructions that cause one or more processors of a computing system to perform any combination of the methods of examples 1-11.

Example 25. A non-transitory computer-readable storage medium encoded with instructions that, when executed by one or more processors of a computing device, cause the one or more processors to perform any combination of the methods of examples 1-11.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

This description, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with the examples of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structures or any other structure suitable for implementation of the techniques described. In addition, in some examples, the functionality described may be provided within dedicated hardware and/or software modules. Also, the techniques could be fully implemented in one or more circuits or logic elements.

## Claims

1. A method, comprising:
receiving, by a first computing device, an indication of a subscription request to at least one data field of a plurality of data fields of a bridging protocol, wherein the indication is received from a second computing device and wherein the subscription request specifies one or more types of messages that correspond to the at least one data field and that are to be sent via the bridging protocol;
generating, by the first computing device, one or more messages for at least one of the plurality of data fields;
determining, by the first computing device, a subset of messages from the one or more messages to provide to the second computing device, wherein each message from the subset of messages is associated with the subscribed at least one data field; and
providing, by the first computing device, the subset of messages to the second computing device via the bridging protocol.

2. The method of claim 1, wherein the subset of messages is a first subset, and further comprising:
determining, by the first computing device and based on associated data fields, a second subset of messages from the one or more messages, wherein each message of the second subset of messages is associated with at least one data field to which the second computing device has not subscribed; and
refraining, by the first computing device, from providing the second subset of messages to the second computing device.

3. The method of claim 1 or 2, wherein the second computing device determines the indication of a subscription request at least in part based on a context of the second computing device, and wherein the context is a contextualized state of the second computing device.

4. The method of claim 3, wherein the second computing device determines the context based on at least one of:
user interaction with second computing device,
an activity state of the second computing device,
a widget displayed by the second computing device, or
a media object executed by the second computing device.

5. The method of any of claims 1-4, wherein the subscription request includes an indication of one or more subscriptions, and wherein each of the one or more subscriptions includes session criteria indicative of requirements for a subscription to apply and a session field mask indicative of one or more data fields required to satisfy the subscription.

6. The method of claim 5, wherein each of the one or more subscriptions include a rate limit, the method further comprising:
determining, by the first computing device, whether a rate limit for at least one of the one or more subscriptions has been exceeded; and
responsive to determining that a rate limit for the at least one subscription has been exceeded, refraining, by the first computing device, from providing messages associated with the at least one subscription to the second computing device.

7. The method of any of claims 1-6,
wherein determining the subset of messages further comprises:
determining messages of the subset of messages generated by the first computing device within a predetermined window of time;
and/or wherein determining the subset of messages further comprises:
determining, for each message of the one or more messages generated by the first computing device, an associated data field of the plurality of data fields; and
determining the subset of messages based on the associated data field for each message of the one or more messages.

8. The method of any of claims 1-7, wherein the indication is a first indication, and further comprising:
generating, by the second computing device, a second indication of an updated subscription request; and
receiving, by the first computing device, the second indication of the updated subscription request generated by the second computing device, and wherein
determining the subset of messages includes determining the subset of messages based on at least one data field corresponding to at least one type of message specified by the updated subscription request.

9. The method of any of claims 1-8, wherein the indication of a subscription request is an indication to disable media control on the second computing device, the method further comprising:
responsive to receiving the indication to disable media control on the second device, refraining, by the first computing device, from providing any of the one or more messages to the second computing device.

10. A first computing device, comprising:
memory, and
at least one processor in communication with the memory and configured to:
receive an indication of a subscription request to at least one data field of a plurality of data fields of a bridging protocol, wherein the indication is received from a second computing device and wherein the subscription request specifies one or more types of messages that correspond to the at least one data field and that are to be sent via the bridging protocol;
generate one or more messages for at least one of the plurality of data fields;
determine a subset of messages from the one or more messages to provide to the second computing device, wherein each message from the subset of messages is associated with the subscribed at least one data field; and
provide the subset of messages to the second computing device via the bridging protocol.

11. The first computing device of claim 10, wherein the subset of messages is a first subset, and wherein the at least one processor is further configured to:
determine, based on associated data fields, a second subset of messages from the one or more messages, wherein each message of the second subset of messages is associated with at least one data field to which the second computing device has not subscribed; and
refrain from providing the second subset of messages to the second computing device.

12. The first computing device of claim 10 or 11, wherein the second computing device determines the indication of a subscription request at least in part based on a context of the second computing device, and wherein the context is a contextualized state of the second computing device.

13. The first computing device of any of claims 10-12, wherein the subscription request includes an indication of one or more subscriptions, and wherein each of the one or more subscriptions includes session criteria indicative of requirements for a subscription to apply and a session field mask indicative of one or more data fields required to satisfy the subscription.

14. The first computing device of claim 13, wherein each of the one or more subscriptions include rate limit, and wherein the at least one processor is further configured to:
determine whether a rate limit for at least one of the one or more subscriptions has been exceeded; and
responsive to determining that a rate limit for the at least one subscription has been exceeded, refrain from providing messages associated with the at least one subscription to the second computing device.

15. A non-transitory computer-readable storage medium encoded with instructions that, when executed, cause at least one processor of a first computing device to perform the method of any of claims 1-9.
